# EUROPEAN PATENT SPECIFICATION

(11) **EP 3 877 241 B1**
(45) Date of publication and mention of the grant of the patent: **12.11.2025**
(21) Application number: 19857326.3
(22) Date of filing: 27.06.2019
(51) Int. Cl.: B62D 33/04, B62D 27/06, B62D 29/00, B60P 1/28, B62D 25/20, B62D 33/027

(54) **DUMPER FLOOR PANEL CONSTRUCTION**
PLATTENKONSTRUKTION EINES KIPPERBODENS
CONSTRUCTION DE PANNEAUX DE PLANCHER DE TOMBEREAU

(30) Priority: 29.06.2018 TR 201809313
(43) Date of publication of application: 15.09.2021
(73) Proprietor: Tirsan Treyler Sanayi Ve Ticaret Anonim Sirketi, 54010 Arifiye/Sakarya (TR)
(72) Inventor: DINDAR, Seyit, Arifiye/Sakarya (TR); SARMAN, Mustafa Cenk, Arifiye/Sakarya (TR)
(74) Representative: Yamankaradeniz, Kemal
(86) International application number: PCT/TR2019/050512
(87) International publication number: WO 2020/050803

(56) References cited:
- EP-A1- 3 056 381
- AU-B2- 623 096
- NL-C2- 1 024 467
- US-A- 3 909 059
- US-A- 4 631 891
- US-A1- 2007 046 068
- US-A1- 2007 102 961
- US-A1- 2012 104 796

## Description

### TECHNICAL FIELD

The invention consists mainly of the construction of the floor panel of aluminum box type dumpers used for the transportation of the construction materials, excavation and ruin waste and fine granular materials for mining in main road and off-road conditions.

### TECHNICAL BACKGROUND

Currently the floor of the dumper vessel consists of a floor sheet and supporting crosses welded at full length of the lower part of the sheet. Supporting crosses are designed as open "V" or "U" shapes and are used to increase the strength of the dumper vessel.

The current method consists of welding the floor sheet located on the lower floor of the dumper vessel with the supporting crosses mounted on the lower surface of the floor sheet. In case of inconveniences in the above mentioned method, the dumper vessel can be overloaded, cracks can occur on floor crosses and floor sheets, which can lead to deformations.

In addition, in case the distance between the floor supporting cross and the floor sheet is excessive, due to the fact that the welding between reinforcements is done without any extra reinforcement, permanent deflections and deformations occur in the floor sheets due to the load effect. Above mentioned deformations are pot-shaped and causes the weight to stick to the inner surface of the dumper vessel and prevent the effective discharge of the load. The adherence of the transported weight with the dumper vessel creates an imbalance each time the dumper is being raised and thus increases the risk of tipping over of the weight. Also, as all the weight can not be unloaded, the vehicle's curb weight and thus the fuel consumption is increased.

Additionally, as the reinforcement crossings used in the present application are in the form of "V" or "U", and they have an open end, bevel ends are applied to the crosses after the welding method, thus crosses are deformed.

Utility model/patent application with EP3210860 application number discovered after the technical investigations is related with a construction including at least one dumper panel, and a profile connection connecting the panel connection to another panel, pole and/or a rear wall frame. As you can see, there is not any advance about the reinforcement crosses mounted to the dumper floor panel lower surface in the above mentioned application.

Another application discovered after the technical investigations with DE1860902 application number is related with the side frame disposed on the long edges of the support crossings to be used for overlapping the joining edges of the support crossings. As you can see, there is not any advance about the mounting on the panel of the supporting crosses mounted to the dumper floor panel lower surface and about the floor panel in the above mentioned application.

US3909059A discloses a floor construction for placement on the main frame of a load carrying vehicle including a plurality of longitudinally extending panel members preferably of extruded aluminum, positioned in side by side spaced apart relationship on the main frame. The panel members have a load bearing surface and a pair of leg portions downwardly extending on opposite longitudinal sides of the load bearing surface. The leg portions terminate in an outwardly extending lateral flange which has an upper bearing surface and a lower bearing surface contacting the main frame of the vehicle. A plurality of longitudinally extending channel members are positioned between adjacent pairs of panel members. The channel members include a generally horizontal upper surface extending between adjacent panel members and a pair of locking webs downwardly extending on opposite longitudinal sides of the upper surface. The locking webs seatably engage the upper bearing surface of the lateral flanges of adjacent panel members whereby lateral movement between adjacent panel members is prevented. US3909059A also discloses a vehicle frame construction suitable for use in combination with the disclosed floor structure.

As a result, many improvements are implemented in dumper floor panel structures, thus new constructions are needed in order to eliminate the above mentioned disadvantages and solve the existing problems.

### OBJECT OF THE INVENTION

The current invention is related with a dumper floor panel construction meeting the above mentioned requirements, eliminating all disadvantages and introducing some additional advantages.

The main purpose of the invention is to provide a long lasting dumper floor panel with high strength by eliminating the necessity of a welding application between the floor sheet and the floor crossing and thus eliminating any possible deformations arising from the welding application.

Another purpose of this invention is opening the ends of the crosses and preventing any possible fauxpas in the floor sheet thanks to the shapes of the supporting crosses.

Another purpose of this invention is to provide a lighter and easy to mount dumper floor panel capable of providing the same level of strength with less and lighter floor supporting crosses by ensuring a strength advantage thanks to the section structure of the floor.

Another purpose of this invention is to provide a panel with low labor cost which is faster to repair in possible repairing applications thanks to the hot-plug application not requiring any additional repairing part and the base elements joined with the interlocking method.

The above mentioned invention is a dumper floor panel structure according to claim 1. The invention is related with at least one lower profile and one upper floor profile supporting the dumper from the lower part of the vessel to provide it some strength, and with a floor panel created with the junction of one lower and one upper floor profile thanks to their shapes.

The structural and characteristic properties of the invention, along with all the advantages can be more clearly understood thanks to the figures below and the related detailed explanations. Which is why, an evaluation shall be made considering those figures and detailed explanations. The invention however is defined by the appended claims.

### SHORT DESCRIPTION OF THE FIGURES

In order to understand the advantages of the current invention along with the additional components, the invention shall be evaluated along with the figures described below.

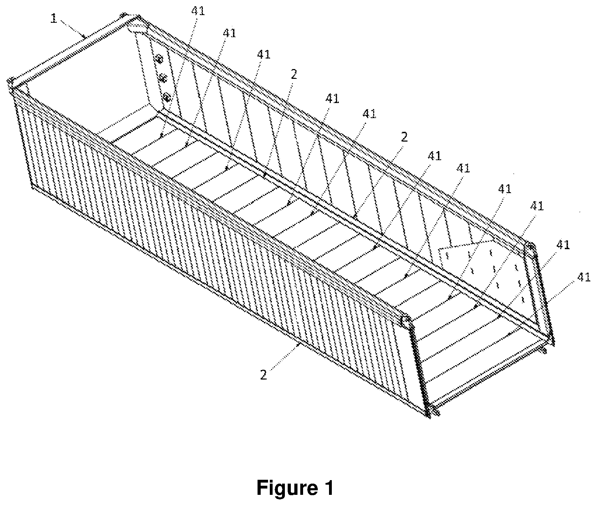

In Figure 1, you can see the perspective view of the dumper floor panel where the above mentioned dumper floor panel structure invention is used.

In Figure 2, you can see the perspective view from the top of the dumper floor panel.

### REFERENCE NUMBER

- A.: Dumper floor panel structure
- 1.: Dumper vessel
- 2.: Lower belt
- 3.: Shock absorber
- 4.: Floor panel
- 41.: Lower floor profile
- 42.: Upper floor profile

### DETAILED DESCRIPTION OF THE INVENTION

In this detailed description, the preferred structures of the dumper floor panel structure (A) subject to the invention are explained, only in order to better understand the subject without creating any restrictive effect.

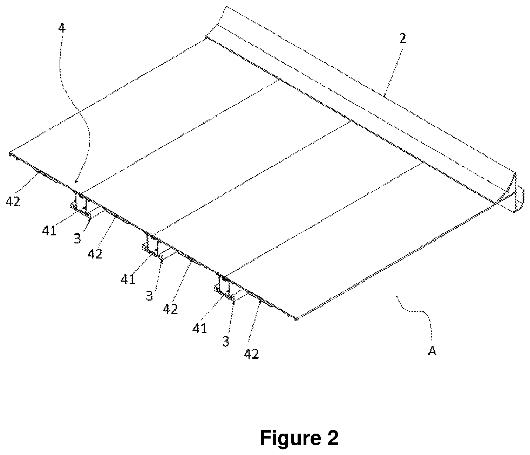

In figure 2, you can see the perspective view from the top of the dumper floor panel structure (A). Includes the floor panel (4) which consists of the dumper floor panel structure (A), dumper vessel (1), lower belt (2), shock absorber (3), and the lower floor profile (41) - upper floor profile (42) integrated each other.

The dumper vessel (1) is located on the upper part of the vehicle where the materials to be transported are stored, and where the load is stored and transported. Lower belt (2) is the main strength supporting the lower part of the dumper vessel (1). The lower belt (2) provides support for the horizontal and perpendicular forces created by the load and provides support for the floor panel (4) to the dumper vessel (2) and also provides connection to the other side panels.

Shock absorber (3) has been placed under the dumper vessel (1), floor panel (4) and lower floor profile (41) with click-fit method thanks to its shape and form. The shock absorber (3) absorbs the shocks between the car chassis and dumper vessel (1), and prevents any possible cracks on the dumper vessel (1) components due to the impacts and fatigue.

Floor panel (4) has been formed with the click-fit of the lower floor profile (41) and upper floor profile (42), thanks to the zigzag shape and form of these two components. Which is why, welding method is not used for manufacturing the floor panel (4). The floor panel (4) is the component carrying the load on the dumper vessel (1). This component is located under the dumper vessel (1) and supports the resistance to the vertical force created by the load.

The lower floor profile (41), is a section produced with aluminum extrusion method having a rectangular or longitudinal shape, not having a "V" or "U" shape, with closed end, having a zigzag shape ensuring the click-fit with the upper floor (42). The lower floor profile (41) provides supporting strength to the floor panel (4) and dumper vessel (1) from the lower part, and constitutes the lower part of the floor panel (4) and has a form that can be click-fitted to the upper floor profile (42).

The upper floor profile (42) is a section produced with aluminum extrusion method having a rectangular or longitudinal shape, and is an extruded profile with a zigzag shape ensuring a click-fit with the lower floor (41). The upper floor profile (42) provides supporting strength to the floor panel (4) and dumper vessel (1), and constitutes the upper part of the floor panel (4). The upper floor profile (42) and the lower floor profile (41) have extruded components that can be click-fitted to each other and have been designed for a welded/weld less connection.

## Claims

1. Dumper floor panel structure (A) of a dumper vessel (1) where the load of a dumper truck is stored and carried, the dumper floor panel structure (A) including:
a plurality of lower floor profiles (41), providing supporting strength to the lower part of the dumper vessel (1), and
a plurality of upper floor profiles (42), providing supporting strength to the lower part of the dumper vessel (1), **characterised in that**:
• the lower floor profiles (41) are rectangular shaped, are made of aluminum, manufactured by an extrusion method, and it comprises, in a section, at least one closed side having a zigzag shape, ensuring the click-fit with the upper floor profiles (42); and
• the upper floor profiles (42) are rectangular shaped, having a zigzag shape ensuring a click-fit with the lower floor profiles (41).

2. Dumper truck comprising a dumper vessel (1) formed by a floor panel structure (A) according to claim 1, further comprising a shock absorber (3) between a chassis of the truck and the dumper vessel (1).

## Patentansprüche

1. Plattenstruktur (A) eines Kipperbodens eines Kippergefäßes (1), in dem die Ladung eines Kipperwagens gelagert und befördert wird, wobei die Plattenstruktur (A) eines Kipperbodens Folgendes einschließt:
eine Vielzahl von unteren Bodenprofilen (41), die dem unteren Teil des Kippergefäßes (1) Stützfestigkeit bereitstellt, und
eine Vielzahl von oberen Bodenprofilen (42), die dem unteren Teil des Kippergefäßes (1) Stützfestigkeit bereitstellt, **dadurch gekennzeichnet, dass**:
• die unteren Bodenprofile (41) rechteckig geformt sind, aus Aluminium gefertigt sind, durch ein Extrusionsverfahren hergestellt sind und es in einem Bereich mindestens eine geschlossene Seite umfasst, die eine Zickzackform aufweist, die die Klickpassung mit den oberen Bodenprofilen (42) sicherstellt; und
• die oberen Bodenprofile (42) rechteckig geformt sind und eine Zickzackform aufweisen, die eine Klickpassung mit den unteren Bodenprofilen (41) sicherstellt.

2. Kipperwagen, umfassend ein Kippergefäß (1), das durch eine Bodenplattenstruktur (A) nach Anspruch 1 ausgebildet ist, ferner umfassend einen Stoßdämpfer (3) zwischen einem Fahrgestell des Wagens und dem Kippergefäß (1).

## Revendications

1. Structure de panneaux de plancher de tombereau (A) d'une benne de tombereau (1) où la charge d'un camion tombereau est stockée et transportée, la structure de panneaux de plancher de tombereau (A) comprenant :
une pluralité de profilés de plancher inférieurs (41), apportant une résistance de support à la partie inférieure de la benne de tombereau (1), et
une pluralité de profilés de plancher supérieurs (42), apportant une résistance de support à la partie inférieure de la benne de tombereau (1),
**caractérisée en ce que** :
• les profilés de plancher inférieurs (41) sont de forme rectangulaire, sont faits en aluminium, fabriqués par un procédé d'extrusion, et il comprend, en coupe, au moins un côté fermé ayant une forme en zigzag, assurant l'encliquetage avec les profilés de plancher supérieurs (42) ; et
• les profilés de plancher supérieurs (42) sont de forme rectangulaire, ayant une forme en zigzag assurant un encliquetage avec les profilés de plancher inférieurs (41).

2. Camion tombereau comprenant une benne de tombereau (1) formée par une structure de panneaux de plancher (A) selon la revendication 1, comprenant en outre un amortisseur (3) entre un châssis du camion et la benne de tombereau (1).
